# EUROPÄISCHE PATENTSCHRIFT

(11) **EP 2 042 436 B1**
(45) Veröffentlichungstag und Bekanntmachung des Hinweises auf die Patenterteilung: **27.06.2012**
(21) Anmeldenummer: 08016709.1
(22) Anmeldetag: 23.09.2008
(51) Int. Cl.: B65B 51/04, A22C 11/12, B65B 13/34, B65B 51/05, B65B 25/06

(54) **Vorrichtung zum Zuführen von Verschlussklammern**
Device for supplying locking clips
Dispositif de guidage de pinces de fermeture

(30) Priorität: 28.09.2007 DE 202007013669 U
(43) Veröffentlichungstag der Anmeldung: 01.04.2009
(73) Patentinhaber: Tipper Tie technopack GmbH, 21509 Glinde (DE)
(72) Erfinder: Jens, Thomas, 22927 Groß Hansdorf (DE); Aderhold, Uwe, 21529 Kröpelshagen-Fahrendorf (DE)
(74) Vertreter: Glawe, Delfs, Moll

(56) Entgegenhaltungen:
- EP-A- 0 963 699
- DE-A1- 1 811 115
- DE-A1- 1 957 334
- GB-A- 1 053 611
- US-A- 3 210 835
- US-A- 4 428 176
- US-A1- 2006 075 722

## Beschreibung

Die Erfindung betrifft Vorrichtung zum Zuführen von U-förmigen Verschlussklammern nach den Oberbegriffen der Schutzansprüche 1 bzw. 4. Solche Vorrichtungen dienen insbesondere in Verschlussmaschinen zum Verschließen von Wurstdärmen mit U-förmigen Verschlussklammern als Zuführeinrichtungen für die Verschlussklammern zur eigentlichen Verschließeinrichtung. Gattungsgemäße Vorrichtungen sind bespielsweise in US 2006/075722 A1 oder in der EP 0 963 699 B1 (dort Bezugsziff. 11 in Fig. 2) und insbesondere der DE 20 2004 007 722.1 beschrieben. Sie bestehen aus einer Tragschiene, auf der die Verschlussklammern rittlings aufsitzen, so dass ihre Beine die Seiten der Tragschiene umgreifen, und einer Halteschiene, die entlang der Klammerrücken verläuft, so dass die Verschlussklammern nicht von der Tragschiene fallen können. Im Regelfall verlaufen die Schienen zunächst in der Vertikalen, um dann in die Horizontale einzulaufen, wo sie im Mündungsbereich die Verschlussklammern einer Verschlusseinrichtung übergeben können. Ist ein Verschlussklammerstrang in eine solche Vorrichtung eingelegt, drücken die Verschlussklammern im vertikalen Abschnitt, beispielsweise infolge ihrer eigenen Schwerkraft, auf die mündungsnäheren Verschlussklammern, so dass die Verschlussklammern insgesamt in Richtung Mündung bewegt werden.

Damit die Verschlussklammern möglichst sicher geführt werden, sind die Profile der Tragschienen bei vorbekannten Vorrichtungen weit gehend der U-förmigen Öffnung der Verschlussklammern angepasst, also so geformt, dass die Verschlussklammern bündig aufsitzen. Meist haben die Tragschienen demnach zwei im Wesentlichen parallele Seitenflächen, an denen die Beine der Verschlussklammern anliegen, und eine dazu senkrechte Frontfläche. Diese Profilierung hindert die Verschlussklammern daran eine Neigebewegung in der senkrecht auf die Zufuhrrichtung stehenden Ebene auszuführen.

Zuweilen ist es aber erforderlich, dass die Verschlussklammern eben eine solche Neigebewegung vollführen. Denn in einigen Verschlussmaschinen müssen die Verschlussklammern aus Platzgründen gegenüber der Vertikalen geneigt an der Mündung der Vorrichtung bereitgestellt werden. Im Stand der Technik wird dies gelöst, indem die Tragschiene entsprechend der gewünschten Neigebewegung verdrillt wird. Die Halteschiene ist notwendigerweise ebenfalls in entsprechender Weise verdrillt.

Die Verdrillung der Tragschiene ist, da sie zur Erfüllung ihrer Führungsaufgabe vergleichsweise massiv ausgeführt ist, produktionstechnisch aufwendig. Der Erfindung liegt die Aufgabe zugrunde, diesen Aufwand zu verringern. Sie löst diese Aufgabe durch die Merkmale der kennzeichnenden Teile der Schutzansprüche 1 und 4.

Der Witz der Erfindung liegt darin, die Führungsaufgabe von der Tragschiene auf die Halteschiene zu übertragen. Da die Halteschiene weniger massiv ausgeführt sein kann als die Tragschiene, ist die Fertigung wesentlich vereinfacht. Die Erfindung hat erkannt, dass es ausreicht, wenn die Tragschiene die Drehbewegung der Verschlussklammern nicht bewirkt, sondern nur nicht verhindert, und dass es genügt, die zur Drehung notwendige Kraft von der Halteschiene ausüben zu lassen.

Tragschiene im Sinne der Erfindung kann jeder längliche Gegenstand sein, den die Beine einer U-förmigen Verschlussklammer umgreifen können.

Eine erfindungsgemäße Halteschiene ist ein länglicher Gegenstand, der sich im Wesentlichen parallel zur Tragschiene erstreckt, und zwar in einem Abstand, der groß genug ist, so dass der Rücken einer auf der Tragschiene aufsitzenden Verschlussklammer zwischen den Schienen gleiten kann, jedoch klein genug ist, dass die Verschlussklammer nicht durch eine Bewegung in der Profilebene der Tragschiene von dieser abgezogen werden kann.

Wenn in den vorstehenden Definitionen einer Tragschiene und einer Halteschiene von einem länglichen Gegenstand die Rede ist, so kann dieser eine Gegenstand auch aus mehreren Bauteilen gebildet sein, die dann wie eine einzelne Schiene wirken. So kann eine Halteschiene beispielsweise statt aus einem flachen Blech aus zwei oder mehreren parallelen Drähten gebildet sein.

Die Zufuhrrichtung ist die Richtung, in der sich die Verschlussklammern während des Einsatzes der erfindungsgemäßen Vorrichtung entlang der Schienen bewegen. Das Profil einer Schiene ist die Geometrie der Schiene in der Profilebene, die senkrecht zur Zufuhrrichtung liegt. Der Profilverlauf ist die Änderung dieser Geometrie entlang der Zufuhrrichtung.

Es genügt, wenn die Schienenprofile in einem Abschnitt der Vorrichtung in der neu vorgeschlagenen Weise ausgestaltet sind. Die Profile können aber auch für die gesamten Schienen in dieser Weise ausgeführt sein.

Vorzugsweise ist in diesem erfindungsgemäß augestalteten Abschnitt der jeweils kürzeste Abstand zwischen Tragschiene und Halteschiene in der Profilebene konstant. Dann ist gewährleistet, dass die Verschlussklammern weder zwischen den beiden Schienen festklemmen noch von der Tragschiene seitlich herausfallen können.

Erfindungsgemäß ist auch ein Verfahren zum Zuführen U-förmiger Verschlussklammern, bei dem die Verschlussklammern während ihrer Vorwärtsbewegung in Zufuhrrichtung eine Neigebewegung in der Ebene senkrecht zur Richtung der Vorwärtsbewegung vollführen, wobei diese Neigebewegung zumindet in einem Bereich der Vorwärtsbewegung ausschließlich durch eine auf die Klammeraußenseite, vorzugsweise den Klammerrücken, einwirkende Kraft bewirkt wird. Die Klammeraußenseite ist dabei der von der U-förmigen Öffnung abgewandte Bereich der Oberfläche einer Verschlussklammer.

Ein Ausführungsbeispiel der Erfindung wird nachfolgend anhand von Zeichnungen erläutert. Dabei zeigen:

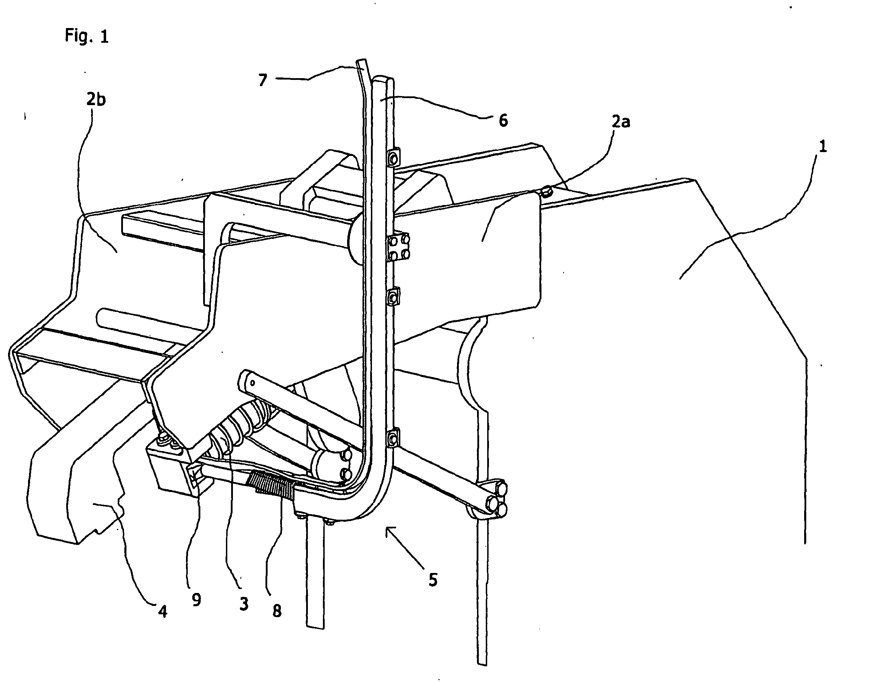

- Fig. 1:: Eine perspektivische Ansicht einer erfindungsgemäßen Vorrichtung, die in eine Verschlussmaschine eingebaut ist;

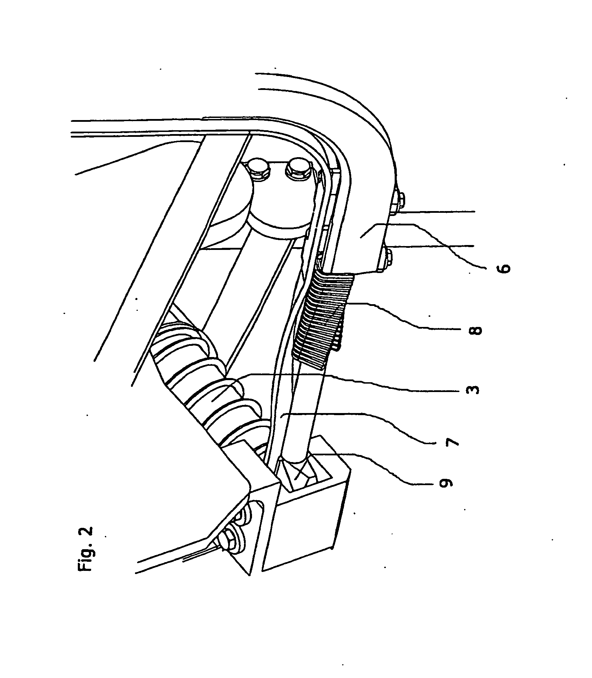

- Fig. 2:: einen vergrößerten Ausschnitt aus Fig. 1, der die erfindungsgemäße Ausgestaltung der Vorrichtung und ihre Wirkungsweise deutlicher zeigt.

An einem insgesamt mit 1 bezeichneten Tragahmen sind zwei Tragbleche 2a, 2b parallel und Hochkant angeordnet. Zwischen diesen ist eine Verschlusseinrichtung aufgehängt, bestehend aus einem nicht dargestellten Stempel, der durch einen pneumatischen Zylinder 3 so angetrieben wird, dass er auf die Matrize 4 schlägt. Während der Bewegung nimmt der Stempel eine Verschlussklammer 8 von der Mündung der insgesamt mit 5 bezeichneten Zufuhreinrichtung ab und bewegt sie durch einen nicht dargestellten Kanal in Richtung auf die Matrize 4, wo er sie dann um ein nicht dargestelltes zusammengeschnürtes Verpackungsstück herum biegt.

Die Zuführeinrichtung 5 umfasst eine Tragschiene 6 und eine Halteschiene 7, die beide an einem der Tragbleche 2a angebracht sind. Die Verschlussklammern 8 werden am mündungsfernen Ende so eingelegt, dass ihre Beine die Tragschiene 6 umgreifen, während der Rücken der Halteschiene 7 zugewandt ist. Von diesem mündungsfernen Ende an verlaufen beide Schienen 6, 7 einen größeren Abschnitt lang vertikal, um dann in einen horizontalen Abschnitt in Richtung Mündung überzugehen. Diese Anordnung bewirkt, dass die in diesem Abschnitt liegenden Verschlussklammern 8 infolge der Schwerkraftwirkung einen Druck auf die jeweils vorderen, mündungsnäheren Verschlussklammern 8 ausüben. Dadurch werden auch die im horizontalen Abschnitt der Zufuhreinrichtung 5 befindlichen Klammern 8 vorangetrieben, ohne dass es eines besonderen Antriebsmittels bedarf. Allerdings schließt die Erfindung auch Ausführungen mit Antriebsmitteln beliebiger Art für die Verschlussklammern 8 ein.

Für eine optimale Raumausnutzung in Verbindung mit den weiteren, nicht dargestellten Wirkelementen der Verschlussmaschine ist der Stempelzylinder 3 nicht vertikal, sondern geneigt im Raum angeordnet. Folglich müssen auch die Verschlussklammern 8 mit derselben Neigung an der Mündung der Zufuhreinrichtung 5 zur Verfügung gestellt werden. Damit hierfür nicht - wie im Stand der Technik - die Tragschiene 6 mit ihrem vergleichsweise großen Profil aufwendig verdrillt werden muss, ist der Abschnitt, der herkömmlicherweise verdrillt wäre, mit einem Kreisprofil versehen. Dieses Kreisprofil bewirkt zwar nicht die Neigebewegung der Verschlussklammern 8, es verhindert diese Bewegung aber auch nicht. Bewirkt wird sie durch die Verdrillung der Halteschiene 7, wie der eingezeichnete Abschnitt eines Verschlussklammerstrangs 8 zeigt.

Am mündungsnahen Ende des mit einem Kreisprofil versehenen Abschnitts der Tragschiene 6 verhindern Auflaufflächen 9 eine Verkantung der Klammern 8. Die Auflaufflächen sind eben oder leicht gewölbt, in jedem Fall aber so geneigt, dass die Profilstärke der Tragschiene 6 in Zufuhrrichtung zu- und von der der Halteschiene 7 abgewandten Seite der Tragschiene 6 hin abnimmt. Solche Auflaufflächen verhindern ein Verkanten der Beine der Verschlussklammern 8 und bieten sich immer dann an, wenn auf einen erfindungsgemäß ausgestalteten Abschnitt ein andersartiger Abschnitt der Tragschiene 6 folgt. Ein spiegelsymmetrischer, im Übrigen in gleicher Weise ausgestalteter Auslaufabschnitt bietet sich ebenfalls immer dann an, wenn ein erfindungsgemäß ausgestalteter Abschnitt auf einen andersartigen folgt. Ein solcher Auslaufabschnitt erleichtert die Klammerbewegung, wenn die Verschlussklammern an ihren Rücken durch ein Klebeband zu einem Strang verbunden sind. Über das Klebeband können Drehmomente auf die noch nicht auf dem erfindungsgemäß ausgestalteten Abschnitt befindlichen Verschlussklammern 8 ausgeübt werden, deren Beine dann auf der Tragschiene 6 schleifen könnten. Die dadurch verursachte Reibwirkung wird durch einen Auslaufabschnitt verringert.

## Patentansprüche

1. Vorrichtung zum Zuführen von U-förmigen Verschlussklammern (8) mit einer Tragschiene (6) und einer Halteschiene (7), wobei die Profilverläufe beider Schienen (6, 7) so ausgestaltet sind, dass die Verschlussklammern (8) während ihrer Bewegung in Zufuhrrichtung entlang der Schienen (6, 7) in der Ebene senkrecht zu dieser Zufuhrrichtung in eine Neigebewegung gezwungen werden, **dadurch gekennzeichnet, dass** zumindest in einem Abschnitt beider Schienen (6, 7) die Profilverläufe der Schienen (6, 7) dergestalt sind, dass die für die Neigebewegung der Verschlussklammern (8) erforderliche Kraft nicht von der Tragschiene (6) ausgeübt wird.

2. Vorrichtung nach Schutzanspruch 1, **dadurch gekennzeichnet, dass** die für die Neigebewegung der Verschlussklammern (8) erforderliche Kraft nur von der Halteschiene (7) ausgeübt wird.

3. Vorrichtung nach einem der Schutzansprüche 1 oder 2, **dadurch gekennzeichnet, dass** sich die allein durch die von der Halteschiene (7) ausgeübte Kraft bewirkte Neigebewegung innerhalb eines Abschnitts der Schienen (6, 7) über einen Neigungswinkel von mindestens 5°, vorzugsweise 10°, weiter vorzugsweise 20° erstreckt.

4. Vorrichtung zum Zuführen von U-förmigen Verschlussklammern (8) mit einer Tragschiene (6) und einer Halteschiene (7), **dadurch gekennzeichnet, dass** zumindest in einem Abschnitt beider Schienen (6, 7) das Profil der Tragschiene (6) Rundungen von der Art aufweist, die ein Winkelspiel einer aufsitzenden Verschlussklammer (8) in der Profilebene von mindestens 5°, vorzugsweise 10°, weiter vorzugsweise 20° zulassen.

5. Vorrichtung nach Schutzanspruch 4, **dadurch gekennzeichnet, dass** das Profil der Tragschiene (6) über mindestens 120° des Umfangs, vorzugsweise 240° des Umfangs, weiter vorzugsweise vollständig kreisförmig ist.

6. Vorrichtung nach Schutzanspruch 4, **dadurch gekennzeichnet, dass** das Profil der Tragschiene (6) über mindestens 120° des Umfangs, vorzugsweise 240° des Umfangs, weiter vorzugsweise vollständig elliptisch ist.

7. Vorrichtung nach einem der vorgenannten Schutzansprüche, **dadurch gekennzeichnet, dass** die Halteschiene (7) aus einem flachen Gegenstand, vorzugsweise einem Blech, besteht.

8. Vorrichtung nach einem der vorgenannten Schutzansprüche, **dadurch gekennzeichnet, dass** die Halteschiene (7) entlang eines Abschnitts der Tragschiene (6) in der Profilebene ihre Lage verändert.

9. Vorrichtung nach einem der vorgenannten Schutzansprüche, **dadurch gekennzeichnet, dass** der kürzeste Abstand zwischen Tragschiene (6) und der Halteschiene (7) in der Profilebene in diesem Abschnitt konstant ist.

## Claims

1. Apparatus for feeding U-shaped closure clips (8), having a carrying rail (6) and a retaining rail (7), wherein the profile developments of the two rails (6, 7) are configured such that the closure clips (8), as they move in the feeding direction along the rails (6, 7), are forced to perform an inclination movement in the plane perpendicular to this feeding direction, **characterized in that**, at least in one portion of the two rails (6, 7), the profile developments of the rails (6, 7) are such that the force which is necessary for the inclination movement of the closure clips (8) is not applied by the carrying rail (6).

2. Apparatus according to Claim 1, **characterized in that** the force which is necessary for the inclination movement of the closure clips (8) is exerted only by the retaining rail (7).

3. Apparatus according to either of Claims 1 and 2, **characterized in that** the inclination movement brought about solely by the force applied by the retaining rail (7) extends, within one portion of the rails (6, 7), over an angle of inclination of at least 5°, preferably 10°, further preferably 20°.

4. Apparatus for feeding U-shaped closure clips (8), having a carrying rail (6) and a retaining rail (7), **characterized in that**, at least in one portion of the two rails (6, 7), the profile of the carrying rail (6) has rounded formations of such a kind as to allow a closure clip (8) which is seated thereon to have angular play in the profile plane of at least 5°, preferably 10°, further preferably 20°.

5. Apparatus according to Claim 4, **characterized in that** the profile of the carrying rail (6) is circular over at least 120° of the circumference, preferably 240° of the circumference, further preferably over the entire circumference.

6. Apparatus according to Claim 4, **characterized in that** the profile of the carrying rail (6) is elliptical over at least 120° of the circumference, preferably 240° of the circumference, further preferably over its entire circumference.

7. Apparatus according to one of the aforementioned claims, **characterized in that** the retaining rail (7) consists of a flat article, preferably of a sheet metal.

8. Apparatus according to one of the aforementioned claims, **characterized in that** the retaining rail (7), along one portion of the carrying rail (6), changes position over the profile plane.

9. Apparatus according to one of the aforementioned claims, **characterized by** a constant shortest distance between the carrying rail (6) and the retaining rail (7) over the profile plane in this portion.

## Revendications

1. Dispositif d'alimentation d'agrafes de fermeture (8) en forme de U, comprenant un rail de support (6) et un rail de maintien (7), dans lequel les allures de profil des deux rails (6, 7) sont configurées de telle sorte que les agrafes de fermeture (8) pendant leur déplacement dans la direction d'alimentation le long des rails (6, 7) sont forcées à un mouvement d'inclinaison dans le plan perpendiculaire à cette direction d'alimentation, **caractérisé en ce que**, au moins dans un tronçon des deux rails (6, 7), les allures de profil des rails (6,7) se présentent de telle sorte que la force nécessaire au mouvement d'inclinaison des agrafes de fermeture (8) n'est pas exercée par le rail de support (6).

2. Dispositif selon la revendication 1, **caractérisé en ce que** la force nécessaire au mouvement d'inclinaison des agrafes de fermeture (8) est exercée uniquement par le rail de maintien (7).

3. Dispositif selon l'une quelconque des revendications 1 et 2, **caractérisé en ce que** le mouvement d'inclinaison, obtenu uniquement par la force exercée par le rail de maintien (7), s'étend à l'intérieur d'un tronçon des rails (6, 7) à un angle d'inclinaison d'au moins 5°, de préférence 10°, de manière davantage préférée 20°.

4. Dispositif d'alimentation d'agrafes de fermeture (8) en forme de U, comprenant un rail de support (6) et un rail de maintien (7), **caractérisé en ce que**, au moins dans un tronçon des deux rails (6, 7), le profil du rail de support (6) présente des courbures du type permettant un jeu angulaire d'une agrafe de fermeture (8) mise en place dans le plan de profil d'au moins 5°, de préférence 10°, de manière davantage préférée 20°.

5. Dispositif selon la revendication 4, **caractérisé en ce que** le profil du rail de support (6) est circulaire sur au moins 120° de la circonférence, de préférence 240° de la circonférence, de manière davantage préférée entièrement circulaire.

6. Dispositif selon la revendication 4, **caractérisé en ce que** le profil du rail de support (6) est elliptique sur au moins 120° de la circonférence, de préférence 240° de la circonférence, de manière davantage préférée entièrement elliptique.

7. Dispositif selon l'une quelconque des revendications précédentes, **caractérisé en ce que** le rail de maintien (7) se compose d'un objet plat, de préférence d'une tôle.

8. Dispositif selon l'une quelconque des revendications précédentes, **caractérisé en ce que** le rail de maintien (7) change de position le long d'un tronçon du rail de support (6) dans le plan de profil.

9. Dispositif selon l'une quelconque dés revendications précédentes, **caractérisé en ce que** la distance la plus courte entre le rail de support (6) et le rail de maintien (7) dans le plan de profil est constante dans ce tronçon.
